# EUROPEAN PATENT SPECIFICATION

(11) **EP 1 645 215 B1**
(45) Date of publication and mention of the grant of the patent: **20.12.2006**
(21) Application number: 05021605.0
(22) Date of filing: 04.10.2005
(51) Int. Cl.: A47J 31/56, A47J 31/52

(54) **Coffee machine with electronic temperature control**
Kaffeemaschine mit elektronischer Temperaturregelung
Machine à café avec commande électronique de la temperature

(30) Priority: 08.10.2004 ES 200402292 U
(43) Date of publication of application: 12.04.2006
(73) Proprietor: Quality Espresso, SA, 08040 Barcelona (ES)
(72) Inventor: Vicente Seguer, Carlos, 08040 Barcelona (ES)
(74) Representative: Gislon, Gabriele

(56) References cited:
- US-A- 4 484 515
- US-A1- 2002 121 197

## Description

### Field of the invention

In general, this invention concerns to a coffee machine with electronic temperature control and, more specifically, to a coffee machine with the possibility of the user selecting the temperature of the liquid to be dispensed, coffee or water, or of the steam to be supplied.

The invention is preferably applicable to the area of espresso coffee machines.

### Technical background

Various coffee machines are known with the possibility of control and checking of their various operating parameters, such as, those referring to water level, pressure and temperature. In general, these machines are fitted with a service control panel with one or more groups of pushbuttons associated with respective dispensing groups so that the user is able to choose the amount to be dispensed. Some of these machines also include a digital display that provides a series of codes that are understood by maintenance technical personnel, together with an input for an auxiliary keyboard so that these same technical personnel are able to modify the cited parameters. Such is the case of the machine proposed in patent ES-A-2009867.

One advance with respect to this proposal is that provided by the utility model application, belonging to this applicant, ES-A-1035966, in which a coffee machine is proposed that incorporates an alphanumerical display in its service panel, which is suitable for showing a wide range of information that is directly understandable by the average user. There is a group of keys next to this display, which user can access in order to check and in some cases modify, a series of parameters referring to, among others, machine control functions, and thus, the average user is able to control, for example, the coffee temperature to his or her own taste.

Although this proposal represents an advance with respect to the state of the art, with respect to the possibilities that if offers to a user of interacting with a machine such as that proposed, it also involves the addition of a series of new elements to the simplest machines known up to the time the mentioned utility model application was filled.

US2005/0076788 concerns to a brewing apparatus, such as a coffeemaker, with water temperature control, which comprises a controller connected to a pump, to a series of temperature sensors, and to an input section formed, in some embodiments, by several control switches, which depending on which switch is activated makes the coffeemaker to supply a predetermined amount of coffee at a predetermined temperature. There is not proposed in said document, not even suggested, to provide an independent control for temperature selection not dependant on the amount of coffee selected.

It appears necessary to propose an alternative to the state of the art, which makes the above commented user interaction possible with this type of machines, but at the same time, conserving the simplicity of the machines previously known that did not offer the user the cited machine operational parameter control.

### Explanation of the invention

The machine proposed in this invention complies with the cited objective by making this control possible, in particular temperature control, but, unlike the cited background, by making use of elements already included in the machine that could be considered conventional.

This invention concerns to a coffee machine with electronic temperature control, of the type that consists of at least one group of pushbuttons for selecting, in a direct manner, depending on the pressed pushbutton, the desired measures of coffee and eventually water or steam, at least one heating element to heat up the contents of at least one boiler of said machine, at least one temperature detector device to acquire temperature values of said boiler, together with a control system for said heating element, also associated with temperature selecting means so that the user can choose the temperature of the boiler and hence, the temperature of the supplied coffee, water or steam.

Said group of pushbuttons forms part of said temperature selecting means in order to perform a double function: the conventional one, in other words, said selection, in a direct manner, of said desired measures of coffee, water or steam and said temperature selection, in a second operating mode, thus, with this invention eliminating the need for additional keys or pushbuttons for varying, in this case, the temperature. Other operating parameters, other than that of temperature can also be controlled using the same group of pushbuttons in a manner similar to that used for the temperature control.

For a preferred embodiment the proposed machine is designed so that a user is able to access said second operating mode after having performed a series of push-actions, in accordance with a predetermined sequence, on at least one pushbutton of said group of pushbuttons, in other words, after having entered in such a way, an access code to said second operating mode.

Once in the second operating mode, said user is able to select the temperature, in a direct manner, by pushing at least one pushbutton of said group of pushbuttons, although, preferably, there is a first pushbutton to increase the temperature and a second pushbutton to reduce it, for example, in a one degree centigrade step per push-action.

For another embodiment it is not necessary to enter said code and temperature selection is made by making a series of push-actions, in accordance with a predetermined sequence, of at least one pushbutton of said group of pushbuttons, although this is preferably carried out by pushing several of said pushbuttons. One example of this is to push a pushbutton twice which, on being pushed would offer, in its conventional mode, a standard black coffee and three times a pushbutton that, in its conventional mode, would produce a double black coffee, with that push-actions sequence achieving, for example, a one degree temperature increase.

So that none of said push-actions (for any of the commented embodiments) produces the dispensing of coffee, in other words, to prevent the machine from confusing a push-action of said push-actions sequence with the desire to obtain a single or double coffee (for example), the control system is designed to add a delay in its response to said push-actions, in other words, if a second push-action of any of the pushbuttons of the group of pushbuttons is made before a previously programmed delay time is lapsed, the control system is aware that the second operating mode is to be entered or already is entered (depending on the embodiment), which will prevent coffee being dispensed.

The proposed machine comprises a manometer to detect and indicate, as normal, the boiler pressure; however, the innovating feature of said manometer is that it is designed to also indicate the temperature in a proportional manner to the pressure. This also means that the display previously described in the machines proposed in the cited background is also no longer necessary.

### A brief description of the drawings

The previous and other characteristics and advantages of this invention will be more fully understood from the following detailed description of some embodiments, with reference to the attached drawings, in which:
Fig. 1 is a perspective view of a coffee machine, commonly known as espresso coffee machines, fitted with two of the commented group of pushbuttons associated with two dispensing groups, together with the commented manometer,
Fig. 2 is a diagrammatic view showing the main elements that take part in the temperature control process in the coffee machine proposed by the present invention, and
Fig. 3 is an enlarged view of the manometer fitted to the machine proposed in this invention which performs the double function described above.

### Detailed descriptions of some embodiments

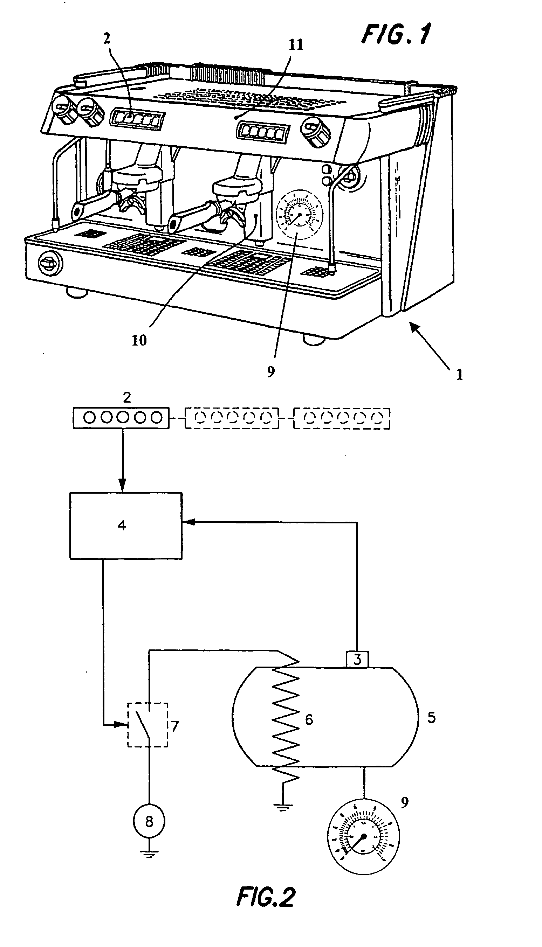

Just as shown in Fig. 1, this invention concerns to a coffee machine with electronic temperature control, of the type comprising at least one group of pushbuttons 2 for selection, in a direct manner, depending on the activated pushbutton, of desired measures of coffee, and eventually water or steam. The machine shown in Fig. 1 incorporates two of said group of pushbuttons 2, installed on a service panel 11 of the same, and each is associated with a respective dispenser group 10. One usual function assignment of said pushbuttons is, for example, the following, for a group of pushbuttons 2 of five pushbuttons: to dispense a single coffee, a double coffee, two single coffees, two double coffees and continuous coffee, respectively.

The proposed machine comprises, as shown in Fig. 2, a heating element 6, which generally consists of several resistors, for heating the contents of at least one boiler 5 of said machine 1, at least one temperature detection device 3 for acquiring temperature values of said boiler 5, and a control system comprising an electronic system 4, for controlling said heating element 6 associated with temperature selecting means to select, by the user, the desired temperature.

Fig. 2 uses a continuous line to show one group of pushbuttons 2 and a dotted line to show two more groups. This is intended to demonstrate that the invention applies to one of more groups of pushbuttons 2.

Said group, or groups, of pushbuttons 2 form part of said temperature selecting means for performing a double function: said selection, in a direct manner, of said desired measures of coffee, water or steam and said temperature selection in a second operating mode.

The mentioned electronic system 4 comprises at least one microprocessor and is connected to said temperature detector device 3 and to said group, or groups, of pushbuttons 2, so that it is able to receive first input signals indicating temperature values of said boiler 5 and second input signals indicating the push-action or push-actions made on the pushbuttons of the group of pushbuttons 2. This can be seen in Fig. 2, where the directions of the signals that communicate the various represented elements with the electronic system 4 are shown by arrows.

The electronic system 4 is designed to process and analyse said first and second input signals and, based on these, control said heating element 6, by switching on/off at least one switching device 7 that, when activated, connects a voltage supply 8 to the heating element 6 (see Fig. 2).

For a preferred embodiment a user can cause said machine to enter said second operating mode by performing a series of push-actions, in accordance with a predetermined sequence, on at least one pushbutton, in general several pushbuttons, of the group of pushbuttons 2. In other words, by entering a predetermined code the second operating mode is accessed.

Once in the second operating mode, temperature selection is made, in a direct manner, by pushing at least one pushbutton of the group of pushbuttons 2, preferably by pushing a first pushbutton of the group of pushbuttons 2, in order to increase the temperature and by pushing a second pushbutton of the group of pushbuttons 2 to reduce the temperature.

In another embodiment, it is possible to avoid the need for entering said code and directly modify the temperature by means of a series of push-actions, performed in accordance with a predetermined sequence, of at least one pushbutton, in general several pushbuttons, of said group of pushbuttons 2.

The electronic system 4 is designed so that there is no confusion between the push-actions to select said measures and the push-actions to select the boiler temperature and thus the temperature of the coffee to be dispensed. In order to accomplish this, the electronic system 4 adds a delay to the response for these push-actions, waiting a predetermined time for a second push-action for entering the second operating mode or directly vary the temperature. If once said predetermined time has lapsed, a second push-action has not occurred, then the electronic system 4 will command the dispensing of the selected amount of coffee.

The figures show how the proposed machine includes a manometer 9 which, in addition to detecting and indicating the boiler 5 pressure, it is also employed to indicate its temperature, since this varies in proportion to the pressure.

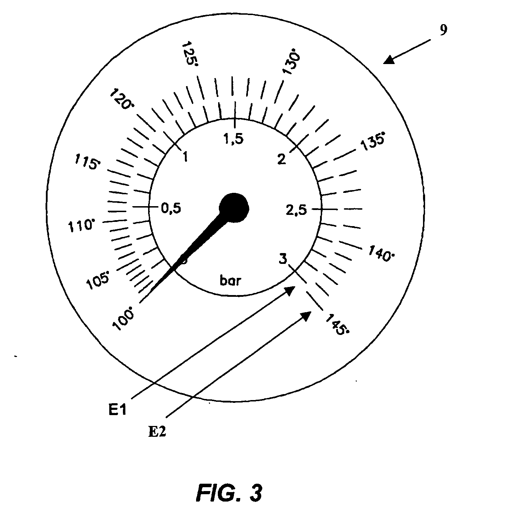

Said manometer, as can be seen in the enlargement of Fig. 3, comprises a first scale E1 indicating the pressure values for the boiler 5, and a second scale E2 that indicates the temperature values by means of a relationship that is proportional to the values indicated on said first scale E1. In said figure, the second scale E2 surrounds the first scale E1, although another layout for the scales E1, E2 is obviously possible.

The manometer 9 is directly connected to the boiler 5, as shown in Fig. 2, and installed on a visible part of the machine, allowing the user to know the current temperature and pressure quickly and easily and vary them, as previously explained, in order to obtain hotter or cooler coffee.

The pushbuttons or service panel 11 can be inscribed directly or indirectly with information referring to instructions to the user for controlling the temperature, in order to facilitate said control. One example of this information would be the access code to the second operating mode.

A person skilled in the art would be able to introduce modifications and changes to the described embodiments without departing from the scope of the invention as defined in the attached claims.

## Claims

1. Coffee machine with electronic temperature control, of the type that comprises at least one group of pushbuttons (2) for selection, in a direct manner, depending on the pushed pushbutton, of desired measures of coffee, and eventually water or steam, at least one heating element (6) to heat up the contents of at least one boiler (5) of said machine (1), at least one temperature detector device (3) to acquire temperature values of said boiler (5), and a control system for said heating element (6), also associated with temperature selecting means for selecting, by a user, the desired temperature, **characterised in that** said at least one group of pushbuttons (2) forms part of said temperature selecting means in order to perform a double function: said selection, in a direct manner, of said desired measures of coffee, water or steam, in a first operating mode, and said temperature selection, in a second operating mode, said control system comprising an electronic system (4) that comprises at least one microprocessor and is connected to said at least one temperature detector device (3) and to said at least one group of pushbuttons (2) so that it is able to receive first input signals indicating temperature values of said boiler (5) and second input signals indicating the push-action/push-actions made on the pushbuttons of the at least one group of pushbuttons (2).

2. A machine, in accordance with claim 1, **characterised in that** said at least one group of pushbuttons (2) is suitable to be used in accordance with said second operating mode after having performed a series of push-actions, in accordance with a predetermined sequence, on at least one pushbutton of said at least one group of pushbuttons (2).

3. A machine, in accordance with claim 2, **characterised in that** said temperature selection is performed, in a direct manner, by pushing at least one pushbutton of said at least one group of pushbuttons (2), once in said second operating mode.

4. A machine, in accordance with claim 3, **characterised in that** said temperature selection is performed by pushing a first pushbutton, of the at least one group of pushbuttons (2), to increase the temperature, and by pushing a second pushbutton, of the at least one group of pushbuttons (2), to reduce the temperature.

5. A machine, in accordance with claim 1, **characterised in that** said temperature selection is performed by a series of push-actions in a predetermined sequence, on at least one pushbutton of said at least one group of pushbuttons (2).

6. A machine, in accordance with claim 5, **characterised in that** said temperature selection is performed by pushing several pushbuttons of said at least one group of pushbuttons (2).

7. A machine, in accordance with claim 1, **characterised in that** it comprises a manometer (9) in order to detect and indicate the boiler (5) pressure.

8. A machine, in accordance with claim 7, **characterised in that** said manometer (9) comprises a first scale (E1) indicating the pressure values for boiler (5), and a second scale (E2) that indicates the boiler (5) temperature values by means of a relationship that is proportional to the values indicated on said first scale (E1).

9. A machine, in accordance with claim 8, **characterised in that** said second scale (E2) surrounds the first scale (E1).

10. A machine, in accordance with claim 1, **characterised in that** said electronic system (4) is suitable to process and analyse said first and second input signals and, based on these, control said heating element (6).

11. A machine, in accordance with claim 10, **characterised in that** said electronic system (4) controls said heating element (6) by switching on/off at least one switching device (7) that, when activated, connects a voltage supply (8) to the heating element (6).

12. A machine, in accordance with claim 11, **characterised in that** said heating element (6) consists of at least one resistor.

## Patentansprüche

1. Kaffeemaschine mit elektronischer Temperaturregelung mit mindestens einer Gruppe Taster (2) zur direkten Auswahl je nach dem betätigten Taster des gewünschten Maßes an Kaffee und gegebenenfalls Wasser bzw. Wasserdampf, mindestens einem Heizelement (6) zum Erhitzen des Inhalts mindestens eines Boilers (5) der Maschine (1), mindestens einer Temperaturerfassungsvorrichtung (3) zur Erfassung der Temperaturwerte des Boilers (5) sowie einer Steuerung für das Heizelement (6), die ebenfalls mit Temperaturwahlmitteln zur Auswahl der gewünschten Temperatur durch den Benutzer in Verbindung stehen, **dadurch gekennzeichnet, dass** zur Ausübung einer doppelten Funktion zumindest eine Gruppe Taster (2) Teil der Temperaturauswahlmittel bildet: nämlich der direkten Wahl des gewünschten Maßes an Kaffee, Wasser oder Wasserdampf in einer ersten Betriebsart sowie der Wahl der Temperatur in einer zweiten Betriebsart, wobei die Steuerung eine Elektronik (4) aufweist, die mindestens einen Mikroprozessor umfasst und mit der mindestens einen Temperaturerfassungsvorrichtung (3) und der mindestens einen Gruppe Taster (2) verbunden ist, so dass sie erste Eingangssignale zur Anzeige der Temperaturwerte des Boilers (5) und zweite Eingangssignale zur Anzeige der an den Tastern vorgenommenen Betätigungsschritte der mindestens einen Gruppe Taster (2) empfangen kann.

2. Maschine nach Anspruch 1, **dadurch gekennzeichnet, dass** die mindestens eine Gruppe Taster (2) gemäß der zweiten Betriebsart nach Durchführung einer Reihe von Betätigungsschritten gemäß einer vorgegebenen Folge an mindestens einem der Taster der mindestens einen Gruppe Taster (2) einsetzbar ist,

3. Maschine nach Anspruch 2, **dadurch gekennzeichnet, dass** die Temperaturwahl durch einmalige direkte Betätigung mindestens eines Tasters der mindestens einen Gruppe Taster (2) in der zweiten Betriebsart erfolgt.

4. Maschine nach Anspruch 3, **dadurch gekennzeichnet, dass** die Temperaturwahl durch Betätigung eines ersten Tasters der mindestens einen Gruppe Taster (2) zwecks Erhöhung der Temperatur und durch Betätigung eines zweiten Tasters der mindestens einen Gruppe Taster (2) zwecks Erniedrigung der Temperatur erfolgt.

5. Maschine nach Anspruch 1, **dadurch gekennzeichnet, dass** die die Temperaturwahl durch eine Reihe von Betätigungsschritten gemäß einer vorgegebenen Folge an mindestens einem Taster der mindestens einen Gruppe Taster (2) erfolgt,

6. Maschine nach Anspruch 5, **dadurch gekennzeichnet, dass** die Temperaturwahl durch Betätigung mehrerer Taster der mindestens einen Gruppe Taster (2) erfolgt.

7. Maschine nach Anspruch 1, **dadurch gekennzeichnet, dass** sie ein Druckmessgerät (9) zur Erfassung und Anzeige des Drucks des Boilers (5) umfasst.

8. Maschine nach Anspruch 7, **dadurch gekennzeichnet, dass** das Druckmessgerät (9) eine erste Skala (E1) zur Anzeige der Druckwerte für den Boiler (5) und eine zweite Skala (E2) zur Anzeige der Temperaturwerte des Boilers (5) mittels einer Beziehung, die proportional zu den auf der Skala (E1) angezeigten Werten ist, umfasst.

9. Maschine nach Anspruch 8, **dadurch gekennzeichnet, dass** die zweite Skala (E2) die erste Skala (E1) umgibt.

10. Maschine nach Anspruch 1, **dadurch gekennzeichnet, dass** die Elektronik (4) zur Verarbeitung und Auswertung des ersten und zweiten Eingangssignals und anhand dieser zur Steuerung des Heizelements (6) geeignet ist.

11. Maschine nach Anspruch 10, **dadurch gekennzeichnet, dass** durch die Elektronik (4) das Heizelement (6) durch Ein- und Ausschalten mindestens einer Schaltvorrichtung (7), die bei Ansteuerung eine Spannungsversorgung (8) mit der Heizvorrichtung (6) verbindet, gesteuert wird.

12. Maschine nach Anspruch 11, **dadurch gekennzeichnet, dass** das Heizelement (6) aus mindestens einem Widerstand besteht.

## Revendications

1. Machine à café à contrôle de température électronique, du genre comportant au moins un groupe de boutons (2) pour la sélection, directement, selon le bouton sur lequel on appuie, des mesures de café et éventuellement d'eau ou de vapeur souhaitées, au moins un élément chauffant (6) pour chauffer le contenu d'au moins une chaudière (5) de cette machine (1), au moins un dispositif détecteur de température (3) pour acquérir les valeurs de température de cette chaudière (5) et un système de contrôle pour cet élément chauffant (6), également associé aux moyens de sélection de la température souhaitée par un utilisateur, **caractérisée en ce qu'**au moins un groupe de boutons (2) fait partie de ces moyens de sélection de la température afin d'effectuer une fonction double: cette sélection, directement, de ces mesures de café, d'eau ou de vapeur souhaitées, dans un premier mode de fonctionnement, et cette sélection de la température, dans un deuxième mode de fonctionnement, ce système de contrôle comprenant un système électronique (4) comportant au moins un microprocesseur et il est relié à cet au moins un dispositif détecteur de la température (3) et à cet au moins un groupe de boutons (2) de sorte qu'il puisse recevoir des premiers signaux d'entrée indiquant les valeurs de la température de cette chaudière (5) et des deuxièmes signaux d'entrée indiquant que l'on appuie sur les boutons d'au moins un groupe de boutons (2).

2. Machine conformément à la revendication 1, **caractérisée en ce que** cet au moins un groupe de boutons (2) est apte pour être utilisé conformément à ce deuxième mode de fonctionnement après avoir appuyé plusieurs fois, conformément à une séquence prédéterminée, sur au moins un bouton de cet au moins un groupe de boutons (2).

3. Une machine, conformément à la revendication 2, **caractérisée en ce que** cette sélection de la température se fait directement, en appuyant sur au moins un bouton de cet au moins un groupe de boutons (2), dès qu'elle se trouve à ce deuxième mode de fonctionnement.

4. Une machine, conformément à la revendication 3, **caractérisée en ce que** cette sélection de la température est effectuée en appuyant sur un premier bouton, du au moins un groupe de boutons (2), pour augmenter la température et en appuyant sur un deuxième bouton, du au moins un groupe de boutons (2) pour réduire la température.

5. Une machine, conformément à la revendication 1, **caractérisée en ce que** cette sélection de la température est effectuée en appuyant plusieurs fois dans une séquence prédéterminée sur au moins un des boutons de cet au moins un groupe de boutons (2).

6. Une machine, conformément à la revendication 5, **caractérisée en ce que** cette sélection de la température est effectuée en appuyant sur plusieurs boutons de cet au moins un groupe de boutons (2).

7. Une machine conformément à la revendication 1, **caractérisée en ce qu'**elle comporte un manomètre (9) afin de détecter et d'indiquer la pression de la chaudière (5).

8. Une machine, conformément à la revendication 7, **caractérisée en ce que** ce manomètre (9) comporte une première graduation (E1) indiquant les valeurs de la pression pour la chaudière (5) et une deuxième graduation (E2) indiquant les valeurs de la température de la chaudière (5) au moyen d'une relation qui est proportionnelle aux valeurs indiquées sur cette première graduation (E1).

9. Une machine conformément à la revendication 8, **caractérisée en ce que** cette deuxième graduation (E2) entoure cette première graduation (E1).

10. Une machine, conformément à la revendication 1, **caractérisée en ce que** ce système électronique (4) est apte pour traiter et analyser ces premier et deuxième signaux d'entrée et, sur cette base, contrôler l'élément chauffant (6).

11. Une machine conformément à la revendication 10, **caractérisée en ce que** ce système électronique (4) contrôle cet élément chauffant (6) en établisant/coupant le courant d'au moins un interrupteur (7) qui, lorsqu'il est activé, relie une alimentation en tension (8) à l'élément chauffant (6).

12. Une machine, conformément à la revendication 11, **caractérisé en ce que** cet élément chauffant (6) consiste en au moins une résistance.
